# EUROPEAN PATENT APPLICATION

(11) **EP 4 517 990 A1**
(43) Date of publication of application: **05.03.2025**
(21) Application number: 22958450.3
(22) Date of filing: 15.09.2022
(51) Int. Cl.: H01M 50/383, H01M 50/112

(54) **BOX, BATTERY, AND ELECTRIC DEVICE**

(71) Applicant: Contemporary Amperex Technology (Hong Kong) Limited, Hong Kong (HK)
(72) Inventor: HU, Lu, Ningde, Fujian 352100 (CN); CHEN, Xiaobo, Ningde, Fujian 352100 (CN); WU, Shaoji, Ningde, Fujian 352100 (CN); WANG, Xuehui, Ningde, Fujian 352100 (CN)
(74) Representative: Ziebig Hengelhaupt Intellectual Property Attorneys Patentanwaltskanzlei PartGmbB
(86) International application number: PCT/CN2022/119137
(87) International publication number: WO 2024/055258

(57) **Abstract**

The embodiments of the present disclosure provide a box, a battery, and an electric device. The box comprises an electrical chamber, a collection chamber, an isolation component, and a processing device. The electrical chamber is configured to accommodate multiple battery cells, wherein at least one battery cell among multiple battery cells comprises a pressure relief mechanism; The collection chamber is configured to collect emissions from the battery cells arranged with the pressure relief mechanism when the pressure relief mechanism is actuated; the isolation component is configured to isolate the electrical chamber and the collection chamber; and the isolation component is provided with a first through-hole, wherein the emissions can enter the collection chamber through the first through-hole. The processing device is arranged at the first through-hole and configured to treat the emissions to reduce a temperature and/or concentration of combustible material in the emissions. The box provided by the present disclosure has relatively high safety.

## Description

### Technical Field

The present disclosure relates to the technical field of batteries, in particular to a box, a battery, and an electric device.

### Background Art

Energy conservation and emission reduction are the keys to the sustainable development of the automotive industry, and electric vehicles, due to their energy-saving and environmentally friendly advantages, have become an important component of sustainable development in the automotive industry. For electric vehicles, battery technology is a crucial factor that affects their development.

Battery in a thermal runaway state will release large amounts of smoke containing flammable substances. The ignition energy required for the smoke is very small. With the assistance of oxygen in the air, the smoke is very easy to ignite. In severe cases, explosions may even occur. In the prior art, it is common to utilize a solution in which the smoke is promptly discharged outside the battery system, thus reducing the expansion rate of thermal runaway and the probability of burning and explosion in batteries. However, the combustibility and hazards of the smoke itself are not reduced, and the risk of burning and explosion remains relatively high.

### Summary

The objective of the present disclosure is to provide a box, a battery, and an electric device to improve the safety of the battery.

The present disclosure is realized by the following technical solutions.

In the first aspect, the present disclosure provides a box, comprising an electrical chamber, a collection chamber, an isolation component, and a processing device. The electrical chamber is configured to accommodate multiple battery cells, wherein at least one battery cell among multiple battery cells comprises a pressure relief mechanism. The collection chamber is configured to collect emissions from the battery cells arranged with the pressure relief mechanism when the pressure relief mechanism is actuated; the isolation component is configured to isolate the electrical chamber and the collection chamber; and the isolation component is provided with a first through-hole, wherein the emissions can enter the collection chamber through the first through-hole. The processing device is arranged at the first through-hole and configured to treat the emissions passing through the first through-hole to reduce a temperature and/or concentration of a combustible material in the emissions.

According to the box in the embodiments of the present disclosure, by arranging a processing device on the path where the battery discharges the emissions, the emissions must pass through the processing device from the electrical chamber to reach the collection chamber during the discharge process. During this process, the processing device reduces the temperature and/or concentration of combustible gases in the emissions. By directly reducing the hazards of the emissions themselves, the probability of combustion or even explosion in the battery system is lowered, thus effectively enhancing the safety of the battery itself.

According to some embodiments of the present disclosure, the processing device comprises a carrier and a treatment material, and the carrier is connected to the isolation component, and the treatment material is arranged on the carrier.

In the above solution, by arranging the treatment material on the carrier, a physicochemical reaction is initiated with the combustible gases in the emissions to reduce the probability of combustion or explosion of the emissions.

According to some embodiments of the present disclosure, the treatment material comprises an oxidant, and the oxidant is configured to oxidize the combustible material in the emissions.

In the above solution, by arranging the oxidant with oxidation capability, oxidation reactions are initiated with the combustible gases in the emissions to reduce the probability of combustion or explosion of the emissions.

According to some embodiments of the present disclosure, the treatment material further comprises a catalyst, and the catalyst is configured to catalyze an oxidation reaction of the oxidant with the combustible material.

In the above solution, by adding catalysts, the reaction rate of the oxidation reactions with the combustible gases in the emissions is increased, thereby enhancing the efficiency of treating the combustible gases in the emissions.

According to some embodiments of the present disclosure, the treatment material further comprises an adsorbent, and the adsorbent is configured to adsorb the combustible material in the emissions.

In the above solution, by arranging the treatment material with adsorption capability, electrolyte vapors in the emissions are adsorbed to reduce the harmfulness of the emissions.

According to some embodiments of the present disclosure, the treatment material comprises a phase change material, and the phase change material is configured to lower a temperature of the emissions through a phase change.

In the above solution, by arranging the phase change material, the temperature is reduced through a phase change to liquefy the electrolyte vapors in the emissions, thereby reducing the harmfulness of the emissions.

According to some embodiments of the present disclosure, the carrier is provided with a gas hole, and the emissions can pass through the gas hole so as to flow into the collection chamber.

In the above solution, by opening the gas hole on the carrier, the flow direction of the emissions is controlled to increase the contact surface and contact time between the emissions and the treatment material.

According to some embodiments of the present disclosure, the carrier is plate-shaped, and the treatment material is arranged on a surface of the carrier.

In the above solution, by arranging the treatment material on the surface of the carrier, the emissions are enabled to fully contact the treatment material while flowing through the carrier, thereby improving the treatment effectiveness.

According to some embodiments of the present disclosure, the processing device comprises multiple carriers, wherein the multiple carriers are stacked along an axial direction of the first through-hole.

In the above solution, by arranging multiple carriers, the emissions are required to pass through the treatment material multiple times, thus allowing for full reaction with the treatment material to achieve the objective of reducing the harmfulness of the emissions.

According to some embodiments of the present disclosure, two adjacent carriers are arranged in a spaced apart manner and the gas holes on the two adjacent carriers are arranged in a staggered manner.

In the above solution, by staggering the gas holes on adjacent carriers, the flow path of the emissions between adjacent carriers is lengthened, thus allowing for sufficient contact with the treatment material to achieve the objective of reducing the harmfulness of the emissions.

According to some embodiments of the present disclosure, the carrier is in the form of a flat or bent plate.

In the above solution, by arranging the carrier as plate-shaped, the objective of allowing sufficient contact between the emissions and the treatment material on the carrier, and the convenience of arranging the treatment material on the carrier, is achieved. This enhances the processing effectiveness of the emissions by the treatment material.

According to some embodiments of the present disclosure, the isolation component comprises a first surface facing the electrical chamber and a second surface facing the collection chamber, and the processing device is arranged inside the first through-hole and not protruding from the first surface and the second surface.

In the above solution, by setting the thickness of the processing device to ensure that it does not protrude from the isolation component, interference with the mounting of battery cells or negative impacts on the flow of emissions are avoided.

According to some embodiments of the present disclosure, the isolation component comprises a first region and a second region; the first region is configured to accommodate multiple battery cells; the second region is provided with a second through-hole communicating with the collection chamber and the electrical chamber; the box further comprises an exhaust port; and the emissions in the collection chamber are discharged from the box through the second through-hole and the exhaust port in sequence.

In the above solution, by separately arranging the first region and the second region, the battery and other components are accommodated separately to avoid interference between them.

According to some embodiments of the present disclosure, the isolation component is a hot management component, and the hot management component is configured to accommodate a heat exchange medium to regulate a temperature of multiple battery cells.

In the above solution, by arranging the hot management component, temperature control is achieved for the battery cell, thus optimizing the operating conditions of the battery.

In the second aspect, the present disclosure further provides a battery cell, comprising the multiple battery cells and the box described in the embodiments above.

In the third aspect, the present disclosure further provides an electric device comprising the battery as described in the above embodiments, wherein the battery is configured to provide electrical energy.

The above description is only an overview of the technical solution of the present disclosure. To provide a clearer understanding of the technical solutions of the present disclosure, it can be implemented according to the content of the summary. In order to make the above and other objectives, features, and advantages of the present disclosure more apparent and understandable, specific embodiments of the present disclosure are provided below.

### Brief Description of Drawings

To provide a clearer understanding of the technical solution of the embodiments of the present disclosure, the following brief introduction of the drawings in the embodiments of the present disclosure will be presented. It is evident that the described drawings below are merely some embodiments of the present disclosure. Those skilled in the art can obtain additional drawings based on the described drawings without the need for inventive effort.
FIG. 1 is a schematic diagram of a vehicle provided in some embodiments of the present disclosure;
FIG. 2 is a structural schematic diagram of a battery provided in some embodiments of the present disclosure;
FIG. 3 is a top view of the battery shown in FIG. 2;
FIG. 4 is a sectional schematic diagram of the battery shown in FIG. 3 along A-A;
FIG. 5 is an enlarged view of portion B of the battery shown in FIG. 4;
FIG. 6 is a schematic diagram of a processing device in the battery shown in FIG. 2;
FIG. 7 is a structural schematic diagram of a processing device in the battery provided in some embodiments of the present disclosure;
FIG. 8 is a top view of the processing device shown in FIG. 7;
FIG. 9 is a sectional schematic diagram of the processing device shown in FIG. 8 along C-C;
FIG. 10 is an enlarged view of portion D of the processing device shown in FIG. 9;
FIG. 11 is a structural schematic diagram of a processing device in the battery provided in some embodiments of the present disclosure;
FIG. 12 is a top view of the processing device shown in FIG. 11;
FIG. 13 is a sectional schematic diagram of the processing device shown in FIG. 12 along E-E; and
FIG. 14 is an enlarged view of portion F of the processing device shown in FIG. 13.

In the drawings, the drawings are not drawn to actual scale.

Reference numerals: 100- battery; 10- box; 101- electrical chamber; 102- collection chamber; 103- isolation component, 1031- first through-hole, 1032- second through-hole; 11- main body, 111- exhaust port; 12- top cover; 20- processing device, 21- carrier, 211- gas hole; 30- battery cell, 31-pressure relief mechanism; 200- controller; 300- motor; 1000- vehicle.

### Detailed Description of Embodiments

Implementation of the present disclosure is described in further detail below in connection with the drawings and embodiments. The detailed description and drawings of the following embodiments are provided for illustrative purposes to explain the principles of the present disclosure. However, they should not be construed to limit the scope of the present disclosure. The present disclosure is not restricted to the described embodiments.

Unless otherwise defined, all technical and scientific terms used herein have the same meaning as understood by those skilled in the art of the relevant technical field. The terms used herein are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features.

The term "embodiment" used herein means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the description of embodiments of the present disclosure, the term "multiple" refers to two or more (including two). Similarly, "multiple groups" refers to two or more groups (including two groups), and "multiple pieces" refers to two or more pieces (including two pieces), unless otherwise explicitly specified.

Additionally, in the description of the embodiments of the present disclosure, technical terms such as "center", "longitudinal", "lateral", "length", "width", "thickness", "up", "down", "front", "back", "left", "right", "vertical", "horizontal", "top", "bottom", "inner", "outer", "clockwise", "counterclockwise", "axial direction", "radial direction", "circumferential direction", etc., indicating orientations or positional relationships, are based on the orientations or positional relationships shown in the drawings. These terms are used for facilitating the description of the embodiments of the present disclosure and simplifying the description, and should not be construed as indicating or implying that the devices or components referred to must have specific orientations or be constructed and operated in specific orientations. Therefore, they should not be understood as limiting the embodiments of the present disclosure.

In the description of the embodiments of the present disclosure, unless otherwise expressly specified and limited, technical terms such as "provide", "connect", "communicate", "fix", and similar terms should be broadly interpreted. For example, they can be fixed connections, detachable connections, or integral connections. They can also be mechanical connections or electrical connections. They can also be direct connections or indirect connections through intermediate media. Furthermore, they can be internal connections within two components or the interaction between two components. Those of ordinary skill in the art can understand the meanings of the above terms in the embodiments of the present disclosure according to specific situations.

In the present disclosure, the term "multiple" refers to two or more (including two). Similarly, "multiple groups" refers to two or more groups (including two groups), and "multiple pieces" refers to two or more pieces (including two pieces).

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on.

In the current market situation, the application of power batteries is becoming increasingly widespread, which are not only used as energy sources in traditional primary industries and secondary industries but also extensively and deeply applied in various fields such as electric bicycles, automobiles, motorcycles, ships, drones, military equipment, aerospace, and other areas. With the continuous development of the industry, the application scope of power batteries is expanding, and the industry scale is continuously increasing.

The inventors have noticed that incidents such as battery fires and explosions in applications represented by electric vehicles often appear in the news, attracting widespread attention from society. These incidents play an important warning role in the development of power batteries.

In the current application scenarios, those skilled in the art place great importance on the energy density of batteries. Batteries with high energy density can deliver higher power output in the same volume. This is of considerable practical significance for the miniaturization and wider application scope of batteries. However, high energy density also implies that the battery cells are densely arranged, and high space utilization means there is less remaining space. When a battery cell undergoes thermal runaway, it rapidly emits a large amount of smoke. At this point, not only is the smoke itself hazardous, but the rapid generation of a large amount of smoke can also lead to a rapid increase in gas pressure inside the battery. This can easily damage the external shell structure of the battery cell and cause smoke to spread to other regions within the battery. Therefore, when a battery cell undergoes thermal runaway, its structure can be destroyed in a very short time. This can have adverse effects on adjacent battery cells, leading to localized thermal runaway of multiple battery cells within the entire battery. Ultimately, this can result in the battery catching fire or even exploding. This also leads to the fact that, for example, an electric car has very limited time for the driver and passengers to escape in the event of a battery accident, which is highly detrimental to the widespread adoption of power batteries.

To address this issue, the typical solution in the prior art is to arrange independent pressure relief mechanisms on individual battery cells and arrange exhaust venting devices specifically for the batteries. In this way, when thermal runaway occurs, the pressure relief mechanism rapidly vents the smoke from the battery cell, and the exhaust pressure relief device vents the smoke outside the battery, thus preventing rapid accumulation of smoke inside the battery. This delays further expansion and deterioration of the thermal runaway by lowering the internal pressure, thus allowing the driver, passengers, and surrounding individuals to evacuate.

Indeed, this solution does to some extent delay the worsening of the situation under the conditions of battery thermal runaway and provides time for evacuation. However, it is important to note that the smoke generated during battery thermal runaway contains highly combustible components. In the complex environment of a thermal runaway battery, even a small ignition source can easily trigger combustion or even explosion. Therefore, the prior art does not fundamentally eliminate the hazards of smoke. There still exists a high probability of combustion or even explosion during the smoke venting process, and it cannot consistently and well delay the time when hazardous occurs during battery thermal runaway. As a result, the enhancement of battery safety is limited.

In view of this, the present disclosure provides a technical solution. By arranging a processing device on the path where the battery discharges the emissions, the emissions must pass through the processing device from the electrical chamber to reach the collection chamber during the discharge process. During this process, the processing device reduces the temperature and/or concentration of combustible gases in the emissions. By directly reducing the hazards of the emissions themselves, the probability of combustion or even explosion in the battery system is lowered, thus effectively enhancing the safety of the battery itself.

The battery disclosed in the embodiments of the present disclosure can be applied, but is not limited to, in electric devices such as vehicles, ships, or aircraft. The power system of the electric device can be formed using the battery disclosed in the present disclosure.

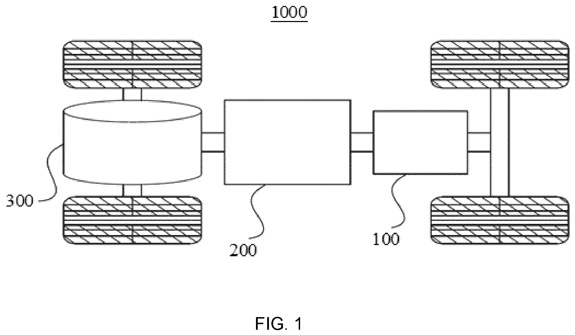

Referring to FIG. 1, FIG. 1 is a structural schematic diagram of a vehicle 1000 provided in one embodiment of the present disclosure. The vehicle 1000 can be a gasoline-powered car, a natural gas car, or a new energy vehicle. The new energy vehicles can be pure electric cars, hybrid cars, extended-range cars, etc. The vehicle 1000 can be provided therein with a motor 300, a controller 200, and a battery 100. The controller 200 is configured to manage the supply of power from the battery 100 to the motor 300. For example, the battery 100 can be arranged at the bottom, front, or rear of the vehicle 1000. The battery 100 is configured to provide power for the vehicle 1000. For instance, the battery 100 can serve as the operational power source for the vehicle 1000, providing power to the electrical systems of the vehicle 1000 for tasks such as starting, navigation, and operational power requirements of the vehicle 1000 during its operation.

In another embodiment of the present disclosure, the battery 100 can serve not only as the operational power source for the vehicle 1000 but also as the driving power source for the vehicle 1000. It can replace or partially substitute for conventional fuels like gasoline or natural gas to provide driving propulsion for the vehicle 1000.

The battery comprises a box 10 and a battery cell 30, wherein the battery cell 10 is accommodated in the box 30. The box 10 is configured to provide an accommodating space for the battery cell 30.

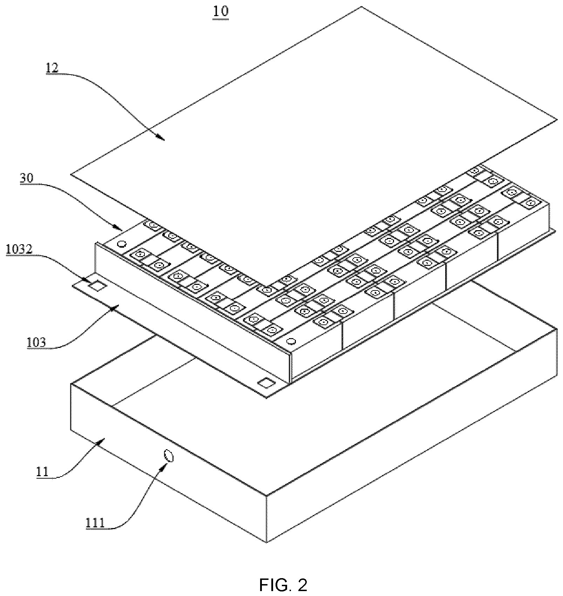

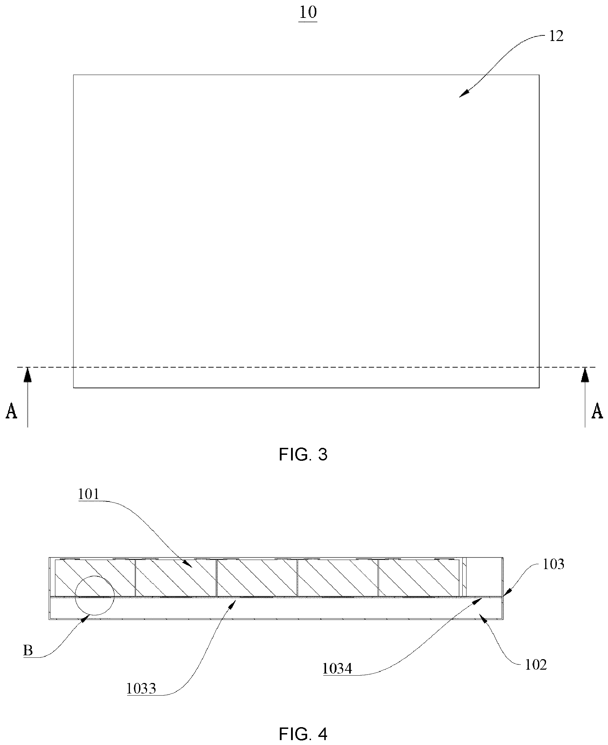

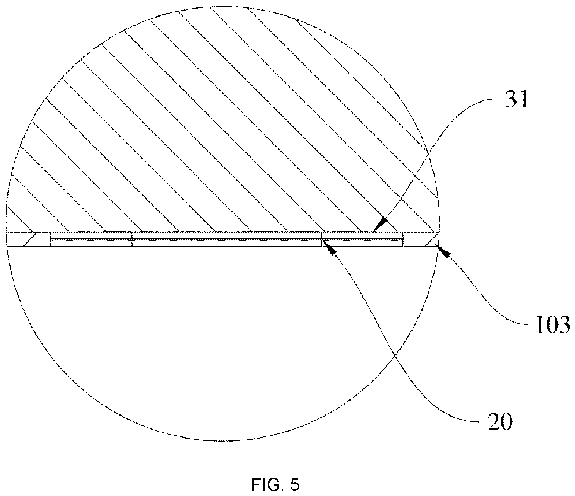

Referring to FIGS. 2 to 5, FIG. 2 is a structural schematic diagram of a battery provided in some embodiments of the present disclosure; FIG. 3 is a top view of the battery provided in some embodiments of the present disclosure; FIG. 4 is a schematic diagram of the section along A-A in FIG. 3; and FIG. 5 is an enlarged view of part B of FIG. 4. The present disclosure provides a box 10, wherein the box 10 comprises an electrical chamber 101, a collection chamber 102, an isolation component 103, and a processing device 20. The electrical chamber 101 is configured to accommodate multiple battery cells 30, wherein at least one battery cell 30 among multiple battery cells 30 comprises a pressure relief mechanism 31. The collection chamber 102 is configured to collect emissions of the battery cell 30 arranged with the pressure relief mechanism 31 when the pressure relief mechanism 31 is actuated. The isolation component 103 is configured to isolate the electrical chamber 101 and the collection chamber 102; and the isolation component 103 is provided with a first through-hole 1031, wherein the emissions can enter the collection chamber 102 through the first through-hole 1031. The processing device 20 is arranged at the first through-hole 1031 and configured to treat the emissions passing through the first through-hole 1031 to reduce a temperature and/or concentration of a combustible material in the emissions.

In the battery module 100, the multiple battery cells 30 can be connected in series, parallel, or hybrid. A hybrid connection refers to having both series and parallel connections among multiple battery cells 30. The multiple battery cells 30 can be directly connected in series, parallel, or hybrid, and then the whole comprising the multiple battery cells 30 is housed in the box 10. Of course, the battery 100 can also be in the form that, the multiple battery cells 30 can be first connected in series, parallel, or hybrid to form battery modules, and then the multiple battery modules can be connected in series, parallel, or hybrid to be formed into a whole, which is accommodated within the box 10. The battery 100 can also comprise other structures. For example, the battery 100 can also comprise a busbar component, configured for achieving an electrical connection between the multiple battery cells 30.

Each battery cell 30 can be a secondary battery or a primary battery. It can also be a lithium-sulfur battery, sodium-ion battery, magnesium-ion battery, or other types, but is not limited to these. The battery cell 30 can have various shapes such as cylindrical, flat, rectangular, or other shapes.

The battery cell 30 refers to the smallest unit comprising the battery 100. The battery cell 30 includes an end cap, a shell, a cell assembly, and other functional components, such as the pressure relief mechanism 31. The pressure relief mechanism 31 is arranged on the shell of the battery cell 30 and the pressure relief mechanism 31 is configured to release the internal pressure of the battery cell 30. It can be actively actuated or passively actuated. For example, when the battery cell 30 experiences thermal runaway, the pressure relief mechanism 31 is passively actuated, and the pressure relief mechanism 31 discharges the emissions generated inside the battery cell 30 out of the battery cell 30. This prevents excessive high internal pressure in the battery cell 30.

The electrical chamber 101 is a portion of the space provided within the box 10, which is configured to accommodate multiple battery cells 30. The multiple battery cells 30 are tightly arranged inside the electrical chamber 101 to make full use of the space within the electrical chamber 101, thereby increasing the energy density of the battery 100. The shape of the electrical chamber 101 can be determined based on the multiple battery cells 30 and other components accommodated. The electrical chamber 101 can also be referred to as a high-voltage chamber because the battery cells 30 within the electrical chamber 101 are electrically connected to form a higher voltage output.

The collection chamber 102 is a portion of the space provided within the box 10, which is provided adjacent to the electrical chamber 101 and can be hermetically or non-hermetically sealed. There are no electrical connections connected to the voltage output within the collection chamber 102. The collection chamber can also be referred to as a low-voltage chamber compared to a high-voltage chamber. The pressure relief mechanism 31 of the battery cell 30 is arranged in the direction towards the isolation component 103, wherein the emissions are discharged from the battery cell 30 into the collection chamber 102 and are then exported from the battery 100 through other components.

The isolation component 103 is arranged within the box 10. In the embodiment, the isolation component 103 is of a plate-like structure horizontally arranged, which divides the internal space of the entire box 10 into an electrical chamber 101 located above and a collection chamber 102 located below. The electrical chamber 101 accommodates the battery cell 30, and the isolation component 103 supports multiple battery cells 30. The material of the isolation component 103 is chosen to ensure balanced fixation and protection of the battery cell 30. Additionally, there is no restriction on the specific material or whether the material of the isolation component 103 is uniform with the material of the box 10. The isolation component 103 can be integrally molded with the box 10 or can be subsequently mounted into the box 10. It can be provided according to the process flow of manufacturing and mounting operations.

The isolation component 103 is provided with a first through-hole 1031. The number, size, and position of the first through-hole 1031 can be set according to the arrangement of the pressure relief mechanism 31 in the battery cell 30. Each first through-hole 1031 is provided in correspondence with the pressure relief mechanism 31. This is to satisfy the objective of smoothly introducing the emissions into the collection chamber 102 while not affecting the flow of the pressure relief mechanism 31. For example, the first through-hole 1031 is provided at a position corresponding to the pressure relief mechanism 31 on each battery cell 30, respectively. The size of the cross-sectional area of the first through-hole 1031 is not smaller than the size of the outlet of the pressure relief mechanism 31. Additionally, the shape of the first through-hole 1031 does not block the outlet of the pressure relief mechanism 31.

When a battery cell 30 undergoes thermal runaway, the main components of the emissions include electrolyte vapor and combustible materials. The electrolyte vapor includes ester substances such as ethyl methyl carbonate, ethylene carbonate, and propylene carbonate. The combustible materials include combustible gases such as hydrogen, carbon monoxide, acetylene, ethylene, and methane, which are alkane substances. Electrolyte vapor is toxic to human health and can cause symptoms such as dizziness, headache, weakness, nausea, and respiratory difficulties through inhalation or skin absorption. Moreover, incomplete combustion can lead to the production of combustible by-products such as carbon monoxide. The hazards of combustible materials are mainly due to the ease with which they can be ignited, thus leading to combustion or even explosion. This results in strong impact and damage to personnel and the surrounding environment.

The processing device 20 is embedded in the first through-hole 1031. The shape of the processing device 20 is substantially the same as the shape of the first through-hole 1031 in the projection in the vertical direction to substantially fill the first through-hole 1031, thus avoiding the emissions from bypassing the processing device 20 and directly entering the collection chamber 102. When the emissions pass through the processing device 20, the processing device 20 is able to provide targeted treatments for the electrolyte vapors and combustible materials in the emissions, which fundamentally reduces the hazardousness of the emissions.

By arranging a processing device 20 in the pathway through which the emissions are discharged, a targeted physical or chemical reaction is carried out on the harmful or hazardous components in the emissions to cause them to be denatured and lose their hazardous properties, or to phase change them into a non-gas, etc. Therefore, the hazards of the emissions can be reduced from the inherent nature of the emissions themselves, thereby enhancing the safety of battery 100.

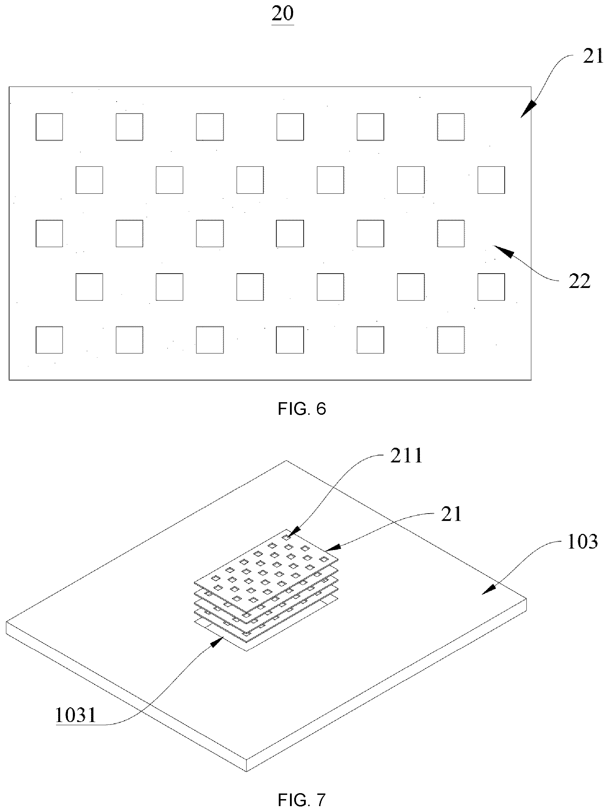

According to some embodiments of the present disclosure, as shown in FIG. 6, FIG. 6 is a schematic diagram of a processing device of a battery in one embodiment of the present disclosure. The processing device 20 comprises a carrier 21 and a treatment material 22, the carrier 21 is connected to the isolation component 103, and the treatment material 22 is arranged on the carrier 21. The carrier 21 is provided in a nested manner within the first through-hole 1031 in the isolation component 103.

The carrier is a structural member arranged within the first through-hole 1031, which is configured for carrying the treatment material 22.

The treatment material 22 can be provided on the carrier 21 by sticking, coating, etc. The treatment material 22 can be selected based on the composition of the emissions so as to treat the emissions.

By providing the carrier 21 and the treatment material 22, the treatment material 22 reacts with the emissions as the emissions pass by, thus realizing the reduction of the harmfulness of the emissions and improving the safety of the battery 100.

According to some embodiments of the present disclosure, the treatment material 22 comprises an oxidant, and the oxidant is configured to oxidize the combustible material in the emissions.

The oxidants target the combustible materials for oxidation. The chemical reaction changes the composition and properties of the combustible material, thus resulting in the environmentally sound treatment of the emissions. Combustion is essentially an oxidation reaction that rapidly releases heat and emits light, and combustible materials capable of being combusted are inherently reducible. Therefore, conducting a relatively gentle oxidation-reduction reaction on the combustible material before combustion occurs can effectively reduce the amount of combustible material. This helps prevent violent oxidation-reduction reactions (combustion) in the emissions, thereby enhancing the safety of the battery 100.

The oxidant can include one or more copper oxide, sodium peroxide, and potassium permanganate. In the embodiment, optionally, the oxidant is in the form of solid powder. Fixing solid powder oxidants such as copper oxide facilitates immobilization on the carrier 21, which prevents the oxidant from dislodging and failing due to vibrations, shocks, or tilting during use.

By arranging the treatment material 22 with oxidation capability, oxidation reactions are initiated with the combustible gases in the emissions to reduce the probability of combustion or explosion of the emissions.

According to some embodiments of the present disclosure, the treatment material 22 further comprises a catalyst, and the catalyst is configured to catalyze an oxidation reaction of the oxidant with the combustible material.

Due to the rapid rate at which the emissions are generated when the battery cell 30 undergoes thermal runaway, the pressure inside the battery cell 30 is high. Therefore, the time for the emissions to pass through the processing device 20 is very short, which results in a short contact time between the emissions and the oxidant, thus leading to incomplete reactions. Therefore, arranging a catalyst on the processing device 20 can enable rapid and effective oxidation reactions of combustible materials in the emissions, enhance reaction rates, and effectively reduce the hazards of the emissions.

The catalysts include silicon carbide porous ceramics and/or precious metal-loaded catalysts. The structure of porous ceramic is characterized by a large contact area, which in turn leads to a larger contact area and a more complete reaction. Precious metal-loaded catalysts use a supporter of the precious metal to support active components, which allows the active component to be dispersed. At the same time, the strength of the catalyst can be increased.

By providing a suitable catalyst, the reaction efficiency to the combustible materials in the emissions can be further improved, which enables the hazardous of the emissions to be significantly reduced after the emissions have passed through the processing device 20. Therefore, the safety of the battery 100 is improved.

According to some embodiments of the present disclosure, the treatment material 22 further comprises an adsorbent, and the adsorbent is configured to adsorb the combustible material in the emissions.

Further included in the combustible materials are electrolyte vapors. The electrolyte is the carrier for ion transport in the battery 100 and typically includes lithium salts and organic solvents, which are essentially organic volatile liquids. When thermal runaway occurs in battery cell 30, the electrolyte is heated to produce electrolyte vapor, which can cause harm to the human body through inhalation and skin absorption. Adsorption of electrolyte vapor can include two types: one is adsorption of positive and negative ions in the electrolyte, and the other is ion exchange adsorption. The present disclosure does not specify the adsorption method but aims to achieve the adsorption for electrolyte vapor.

The adsorbents can include one or more activated carbon, organic solvents, and organic adsorbents. For example, activated carbon has a large surface area, which creates attractive forces with external substances. The attraction between activated carbon and the emissions occurs through intermolecular forces (Van der Waals forces), resulting in adsorption.

The adsorbent absorbs electrolyte vapor from the emissions, thus reducing the content of electrolyte vapor in the emissions and achieving a beneficial effect of reducing the harmfulness of the emissions.

According to some embodiments of the present disclosure, the treatment material 22 comprises a phase change material, and the phase change material is configured to lower a temperature of the emissions through phase change.

The phase change materials have a high thermal conductivity, which is configured to rapidly cool and liquefy the electrolyte vapor they contact, thereby trapping the electrolyte vapor within the processing device 20 and preventing the electrolyte vapor from continuing to disperse outside the battery cell 30. This reduces the content of electrolyte vapor in the emissions and decreases the harmfulness of the emissions.

The arrangement of phase change materials reduces the pressure and harmfulness of the emissions by cooling and liquefying the electrolyte vapor, thereby enhancing the safety of the battery.

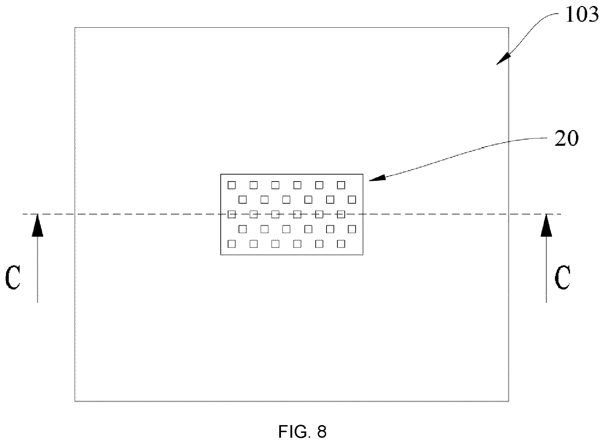

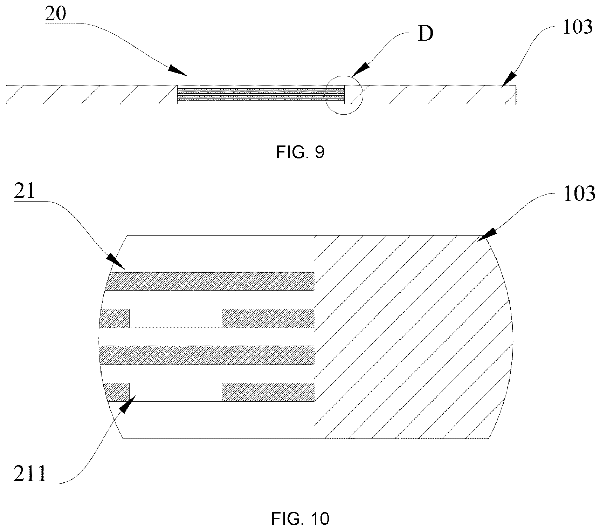

Referring to FIGS. 7 to 10, FIG. 7 is a structural schematic diagram of a processing device in the battery provided in some embodiments of the present disclosure; FIG. 8 is a top view of the processing device in FIG. 7; FIG. 9 is a schematic diagram of the section along C-C in FIG. 8; and FIG. 10 is an enlarged view at portion D in FIG. 9. According to some embodiments of the present disclosure, the carrier 21 is provided with a gas hole 211, and the emissions can pass through the gas hole 211 so as to flow into the collection chamber 102.

The gas hole 211 is a necessary pathway for the emissions to exit the battery cell 30. The gas hole 211 can be provided in round, rectangular, or other shapes. The present disclosure does not limit the shape of the gas holes 211 to the extent that the emissions can pass through. The size of the cross-sectional area of the gas hole 211 can affect the flow rate of the emissions leaving the battery cell 30. Therefore, the gas holes 211 should not be set too small to interfere with the discharge of the emissions, nor should they be set too large to interfere with the placement of the treatment material 22. This ensures sufficient contact between the treatment material 22 and the emissions.

By opening the gas hole on the carrier 21, the flow direction of the emissions is controlled to increase the contact surface and contact time between the emissions and the treatment material 22, so as to allow the emissions to be adequately reacted and treated.

According to some embodiments of the present disclosure, the carrier 21 is plate-shaped, and the treatment material 22 is arranged on a surface of the carrier 21.

The plate-like carrier 21 is arranged within the first through-hole 1031 in a nested manner. Since the emissions can only pass through the gas holes 211 on the carrier 21, the carrier 21 intercepts the emissions and at the same time allows the emissions to come into full contact with the treatment material 22 on the plate-like carrier 21 to fully react to the combustible materials and electrolyte vapors in the emissions. This reduces the hazards of the emissions and improves the safety of the battery 100.

By arranging the carrier 21 as plate-shaped, the objective of allowing sufficient contact between the emissions and the treatment material 22 on the carrier 21, and the convenience of arranging the treatment material 22 on the carrier 21, is achieved. This enhances the processing effectiveness of the emissions by the treatment material 22.

According to some embodiments of the present disclosure, the processing device 20 comprises multiple carriers 21, wherein the multiple carriers 21 are stacked along an axial direction of the first through-hole 1031.

Multiple carriers 21 can be arranged, and the multiple carriers 21 can be stacked layer by layer. This requires the emissions to sequentially contact each carrier 21 during the discharge process, and fully react with the treatment materials 22 on each carrier 21 such as oxidants, catalysts, adsorbents, etc.

By arranging multiple carriers 21, the emissions are required to pass through the treatment material 22 multiple times, thus allowing for full reaction with the treatment material 22. This effectively reduces the content of combustible materials and electrolyte vapors in the emissions and improves the safety of the battery 100.

According to some embodiments of the present disclosure, two adjacent carriers 21 are arranged in a spaced apart manner, and the gas holes 211 on the two adjacent carriers 21 are arranged in a staggered manner.

"Arranging in a staggered manner" means that, if the carriers 21 are parallel to each other in the horizontal direction, the gas holes 211 on adjacent carriers 21 are not arranged in the same vertical direction. In this way, after passing through the gas holes 211 of the carrier 21 above, the emissions must undergo some horizontal movement to reach the gas holes 211 of the next carrier 21 so as to continue the flow. The space between adjacent carriers 21 forms a reaction zone. Since the processing device 20 is provided with reaction substances such as oxidants, catalysts, and adsorbents, each reaction region at least includes the treatment materials 22 carried by one of the adjacent carrier plates.

By arranging the gas holes 211 in a staggered manner, the emissions must pass through multiple layers of reaction zones and fully react with the treatment materials 22 within the reaction zones. This enhances the effectiveness of the processing device 20 and effectively improves the safety of the battery 100.

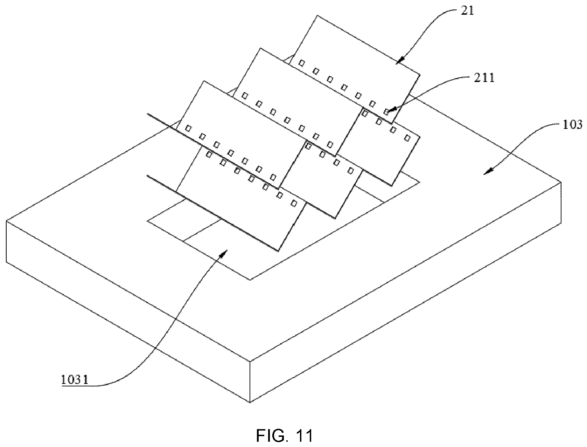

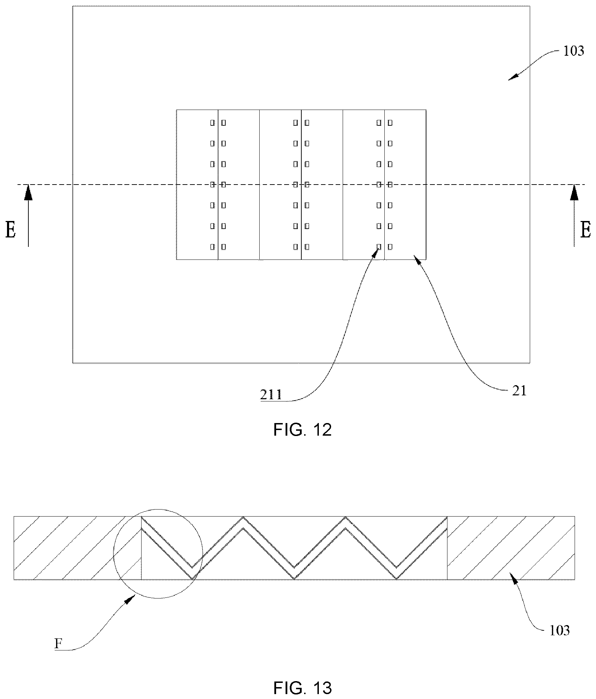

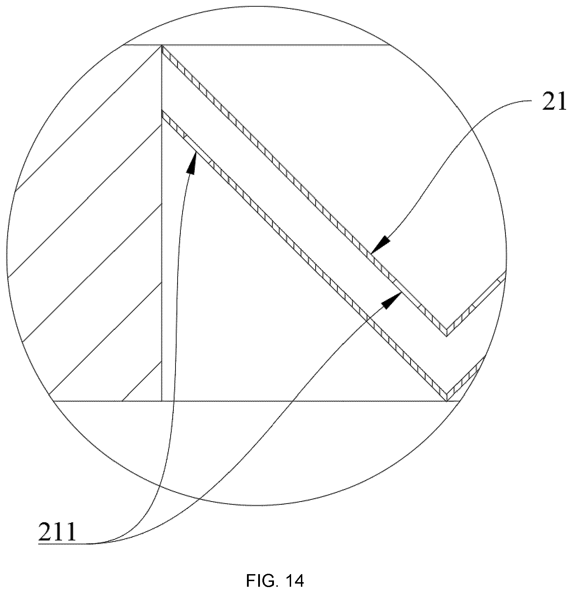

Referring to FIGS. 11 to 14, FIG. 11 is a structural schematic diagram of a processing device in the battery provided in some embodiments of the present disclosure; FIG. 12 is a top view of the processing device shown in FIG. 11; FIG. 13 is a schematic diagram of the section along E-E in FIG. 12; and FIG. 14 is an enlarged view of portion F shown in FIG. 13. According to some embodiments of the present disclosure, the carrier 21 is in the form of a flat or bent plate.

When the carrier 21 is selected as a flat plate-like structure, it can be provided horizontally in the first through-hole 1031 and parallel to the isolation component 103. This structure is less difficult to produce and simpler to work with.

When the carrier 21 is selected in the form of a bent plate, its shape is formed by bending several times to form a multi-stepped shape approximating a W-shape, which has higher strength. The bent plate-like carrier 21 allows the emissions to pass a longer distance in the reaction zone between the carriers 21, thus giving the processing device 20 a better treatment effect on the emissions.

When multiple bent plate-like carriers 21 are comprised within a first through-hole 1031, the gas holes 211 of adjacent carriers 21 are provided at different positions. For example, in the embodiment, each gas hole 211 of the topmost carrier plate is opened at a downward depressed position of the carrier plate, and each gas hole 211 on the carrier 21 of the layer below is opened at an upward protrusion of the carrier 21. Continuing with this pattern, the positions of the opening of the gas holes 211 of the remaining layers of the carrier plates are determined.

By arranging the carrier 21 as plate-shaped, the objective of allowing a sufficient contact between the emissions and the treatment material 22 on the carrier 21, and the convenience of arranging the treatment material 22 on the carrier 21, is achieved. This enhances the processing effectiveness of the emissions by the treatment material 22.

According to some embodiments of the present disclosure, the isolation component 103 comprises a first surface facing the electrical chamber 101 and a second surface facing the collection chamber 102, and the processing device 20 is arranged inside the first through-hole 1031 and not protruding from the first surface and the second surface.

The first surface is the surface of the isolation component 103 facing upwards, and the second surface is the surface facing towards the bottom. When the processing device 20 is arranged inside the first through-hole 1031, it does not protrude from the isolation component 103 in either the upward or downward direction. Particularly when the carrier 21 is selected to be in the form of a bent plate, the upper bending protrusion does not protrude from the first surface, and the lower bending protrusion does not protrude from the second surface.

The processing device 60 does not protrude upwards to avoid interfering with the mounting of the battery cell 30, and does not protrude downwards to avoid disrupting the flow of emissions within the collection chamber 102.

According to some embodiments of the present disclosure, the isolation component 103 comprises a first region 1033 and a second region 1034; the first region 1033 is configured to accommodate multiple battery cells 30; the second region 1034 is provided with a second through-hole 1032 communicating with the collection chamber 102 and the electrical chamber 101; the box 10 further comprises an exhaust port 111; and the emissions in the collection chamber 102 are discharged from the box 10 through the second through-hole 1032 and the exhaust port 111 one at a time.

It should be noted that since the collection chamber 102 is located at the bottom of the battery 100, which is primarily used to guide the discharge of emissions from battery cells 30, the overall energy density of the battery 100 is also taken into account. Therefore, the specifications of the collection chamber 102 are typically limited. It is usually flat in shape, with a height of only a few millimeters. Consequently, it is difficult to accommodate the necessary components of the battery 100 inside the collection chamber 102. The second region 1034 is arranged to accommodate necessary components of the battery 100, such as the pressure relief valve. The pressure relief valve is configured to draw the emissions from the collection chamber 102 to the external environment. The second through-hole 1032 is located on the second region 1034 of the isolation component 103. This facilitates the pressure relief valve, within the third chamber, to draw the emissions from the collection chamber 102 through the second through-hole 1032 and to discharge the emissions from the battery 100 through the exhaust port 111, thereby reducing the pressure inside the battery 100.

The second region 1034 and the first region 1033 can be separated by the encapsulation structure corresponding to the side of the battery 100 module. The battery 100 module encapsulates and combines multiple battery cells 30 and then assembles them into the battery 100. At this point, the second region 1034 does not carry battery cells 30 while forming a separate space to accommodate the necessary components of the battery 100.

By arranging the first region 1033 and the second region 1034, the battery and other components are accommodated separately to avoid interference between them.

According to some embodiments of the present disclosure, the isolation component 103 is a hot management component, and the hot management component is configured to accommodate a heat exchange medium to regulate a temperature of multiple battery cells 30.

The hot management component is configured to accommodate the heat exchange medium to regulate the temperature of the multiple battery cells. The heat exchange medium here can be a liquid or a gas, and regulating the temperature means heating or cooling the multiple battery cells. When cooling or lowering the temperature of the battery cells, the hot management component is configured to accommodate the heat exchange medium to reduce the temperature of multiple battery cells. At this time, the hot management component can also be referred to as a cooling component, cooling system, or cooling plate, and the heat exchange medium it accommodates can also be referred to as a cooling medium or cooling fluid. More specifically, it can be referred to as coolant or cooling gas. Alternatively, the hot management component can be configured for heating to warm the multiple battery cells, which is not limited by the embodiments of the present disclosure.

Providing a hot management component can enable cooling of the battery cell 30 without taking up additional space.

According to some embodiments of the present disclosure, the present disclosure provides a battery 100, wherein the battery 100 comprises multiple battery cells 30 and the box 10 provided in the embodiments above. The multiple battery cells 30 are accommodated within the box 10.

According to some embodiments of the present disclosure, the present disclosure provides an electric device, which comprises the battery 100 as described in the above embodiments. The battery 100 is configured to provide electrical energy. The electric device can be any of the above-mentioned devices or systems that apply the battery.

According to some embodiments of the present disclosure, the present disclosure provides a battery 100, wherein the battery 100 comprises a box 10, a battery cell 30, an isolation component 103, and a processing device 20. The box 10 comprises a main body 11 at the bottom and a top cover 12. An isolation component 103 is horizontally arranged in the main body 11, and the isolation component 103 separates the box 10 into an electrical chamber 101 located at the top and a collection chamber 102 located at the bottom. Multiple battery cells 30 are accommodated in the electrical chamber 101. The battery cell 30 includes a pressure relief mechanism 31, wherein the pressure relief mechanism 31 is configured to discharge the emissions inside the battery cell 30 during thermal runaway. The isolation component 103 is provided with a first through-hole 1031, wherein the first through-hole 1031 communicates the electrical chamber 101 with the collection chamber 102. The position of the first through-hole 1031 corresponds to the position of the pressure relief mechanism 31 on the battery cell 30. The processing device 20 is embedded within the first through-hole 1031, and the processing device 20 includes a structural portion of the carrier 21 and a treatment material 22 arranged on the carrier 21. The treatment material 22 is configured to treat the emissions to reduce a temperature and concentration of the combustible materials and electrolyte vapors in the emissions. The isolation component 103 includes a first region 1033 and a second region 1034, wherein the battery cell 30 is arranged in the first region 1033, and other components of the battery 100 are arranged in the second region 1034. The first region 1033 is separated from the second region 1034 by the encapsulation of the battery 100 module. The second region 1034 is arranged with a second through-hole 1032. An exhaust port 111 is arranged on the adjacent box 10 of the second region 1034. The emissions discharged from the battery cell 30 pass through the processing device 20 into the collection chamber 102, then flow out of the battery 100 sequentially through the second through-hole 1032 and the exhaust port 111. The processing device 20 is provided with multiple flat plate-like carriers 21 provided in a stacking manner, and the gas holes 211 on the two adjacent carriers 21 are arranged in a staggered manner.

According to the embodiments of the present disclosure, by arranging a processing device 20 on the path where the battery 100 discharges the emissions, the emissions must pass through the processing device 20 from the electrical chamber 101 to reach the collection chamber 102 during the discharge process. During this process, the processing device 20 reduces the temperature and/or concentration of combustible gases in the emissions. By directly reducing the hazards of the emissions themselves, the probability of combustion or even explosion in the battery system is lowered, thus effectively enhancing the safety of the battery100.

According to some embodiments of the present disclosure, the present disclosure provides a battery 100, distinguished from the above embodiments, wherein the carrier 21 in the processing device 20 is selected to be in the form of a bent plate. The gas holes 211 of adjacent carriers 21 are provided at different positions. Each gas hole 211 of the topmost carrier plate is opened at a downward depressed position of the carrier plate, and each gas hole 211 on the carrier 21 of the layer below is opened at an upward protrusion of the carrier 21. Continuing with this pattern, the positions of the opening of the gas holes 211 of the remaining layers of the carriers 21 are determined.

In the embodiment, by arranging the bent plate-shaped carrier 21, the emissions spend more time and travel a longer distance within the processing device 20 during the discharge process. This allows the processing device 20 to thoroughly react with the emissions, thereby reducing the hazards of the emissions and enhancing the safety of the battery 100.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A box, comprising:
an electrical chamber, configured to accommodate multiple battery cells, wherein at least one battery cell among multiple battery cells comprises a pressure relief mechanism;
a collection chamber, configured to collect emissions of the battery cell arranged with the pressure relief mechanism when the pressure relief mechanism is actuated;
an isolation component, configured to isolate the electrical chamber and the collection chamber, wherein the isolation component is provided with a first through-hole, wherein the emissions can enter the collection chamber through the first through-hole; and
a processing device, arranged at the first through-hole and configured to treat the emissions passing through the first through-hole to reduce a temperature and/or concentration of a combustible material in the emissions.

2. The box according to claim 1, wherein the processing device comprises a carrier and a treatment material, and the carrier is connected to the isolation component, and the treatment material is arranged on the carrier.

3. The box according to claim 1 or 2, wherein the treatment material comprises an oxidant, and the oxidant is configured to oxidize the combustible material in the emissions.

4. The box according to any one of claims 1 to 3, wherein the treatment material further comprises a catalyst, and the catalyst is configured to catalyze an oxidation reaction of the oxidant with the combustible material.

5. The box according to any one of claims 1 to 4, wherein the treatment material further comprises an adsorbent, and the adsorbent is configured to adsorb the combustible material in the emissions.

6. The box according to any one of claims 1 to 5, wherein the treatment material comprises a phase change material, and the phase change material is configured to lower a temperature of the emissions through a phase change.

7. The box according to any one of claims 1 to 6, wherein the carrier is provided with a gas hole, and the emissions can pass through the gas hole so as to flow into the collection chamber.

8. The box according to any one of claims 1 to 7, wherein the carrier is plate-shaped, and the treatment material is arranged on a surface of the carrier.

9. The box according to any one of claims 1 to 8, wherein the processing device comprises multiple carriers, wherein the multiple carriers are stacked along an axial direction of the first through-hole.

10. The box according to any one of claims 1 to 9, wherein two adjacent carriers are arranged in a spaced apart manner and gas holes on the two adjacent carriers are arranged in a staggered manner.

11. The box according to any one of claims 1 to 10, wherein the carrier is in a form of a flat or bent plate.

12. The box according to any one of claims 1 to 11, wherein the isolation component comprises a first surface facing the electrical chamber and a second surface facing the collection chamber, and the processing device is arranged inside the first through-hole and not protruding from the first surface and the second surface.

13. The box according to any one of claims 1 to 12, wherein the isolation component comprises a first region and a second region; the first region is configured to accommodate multiple battery cells; the second region is provided with a second through-hole communicating with the collection chamber and the electrical chamber; the box further comprises an exhaust port; and the emissions in the collection chamber are discharged from the box through the second through-hole and the exhaust port in sequence.

14. The box according to any one of claims 1 to 13, wherein the isolation component is a hot management component, and the hot management component is configured to accommodate a heat exchange medium to regulate a temperature of multiple battery cells.

15. A battery, comprising
multiple battery cells; and
the box according to any one of claims 1 to 14, wherein the multiple battery cells are accommodated in the box.

16. An electric device, wherein the electric device comprises the battery according to claim 15, and the battery is configured to provide electrical energy.
